# EUROPÄISCHE PATENTANMELDUNG

(11) **EP 1 826 735 A2**
(43) Veröffentlichungstag der Anmeldung: **29.08.2007**
(21) Anmeldenummer: 07450028.1
(22) Anmeldetag: 16.02.2007
(51) Int. Cl.: G08C 17/02

(54) **Vorrichtung zum Überwachen der Wälzlager von Elektromotoren einer Produktionsanlage**

(30) Priorität: 24.02.2006 AT 3062006
(71) Anmelder: Chemserv Industrie Service GmbH, 4021 Linz (AT)
(72) Erfinder: Meyer, Erich, 4040 Linz (AT)
(74) Vertreter: Hübscher, Helmut

(57) **Zusammenfassung**

Es wird eine Vorrichtung zum Überwachen der Wälzlager von rotierenden Maschinen einer Produktionsanlage mit den einzelnen Maschinen zugehörigen Überwachungseinrichtungen (1), die jeweils einen Schwingungsaufnehmer (4), eine Sendestufe (7) für die durch den Schwingungsaufnehmer (4) erfaßten Meßdaten sowie eine über eine Empfangsstufe (12) ansteuerbare Steuerschaltung (5) zur Beaufschlagung der Sendestufe (7) mit den Meßdaten aufweisen, und mit einer Auswerteschaltung (2), die mit einer Sendestufe (11) zur drahtlosen Übertragung von Steuersignalen an die ausgewählte Überwachungseinrichtung (1) zum Senden der Meßdaten versehen und an eine Empfangsstufe (13) für die über eine drahtlose Übertragungsstrecke von den Überwachungseinrichtungen (1) gesendeten Meßdaten angeschlossen ist. Um einen vergleichsweise geringen Steuerungsaufwand auch bei einer Mehrzahl von zu überwachenden Maschinen zu erreichen, wird vorgeschlagen, daß die Überwachungseinrichtungen (1) je einen Meßdatenspeicher (6) für die über einen Beobachtungszeitraum zeitbezogen erfaßten Meßdaten des Schwingungsaufnehmers (4) umfassen und daß die Auswerteschaltung (2) als tragbares Auswertegerät (3) mit einer Eingabeeinheit (10) zur Beaufschlagung ihrer Sendestufe (11) ausgebildet ist.

## Beschreibung

Die Erfindung bezieht sich auf eine Vorrichtung zum Überwachen der Wälzlager von rotierenden Maschinen einer Produktionsanlage mit den einzelnen Maschinen zugehörigen Überwachungseinrichtungen, die jeweils einen Schwingungsaufnehmer, eine Sendestufe für die durch den Schwingungsaufnehmer erfaßten Meßdaten sowie eine über eine Empfangsstufe ansteuerbare Steuerschaltung zur Beaufschlagung der Sendestufe mit den Meßdaten aufweisen, und mit einer Auswerteschaltung, die mit einer Sendestufe zur drahtlosen Übertragung von Steuersignalen an die ausgewählte Überwachungseinrichtung zum Senden der Meßdaten versehen und an eine Empfangsstufe für die über eine drahtlose Übertragungsstrecke von den Überwachungseinrichtungen gesendeten Meßdaten angeschlossen ist.

Da bei Elektromotoren im wesentlichen nur die für die Lagerung des Rotors eingesetzten Wälzlager einem Verschleiß unterworfen sind, wird die Standzeit von diesen Wälzlagern bestimmt, so daß zur Beurteilung der Betriebssicherheit einer mit Elektromotoren ausgerüsteten Produktionsanlage der Abschätzung der verbleibenden Laufzeit der Wälzlager der Elektromotoren eine bedeutende Rolle zukommt. Bekannte Vorrichtungen zur Überwachung der Wälzlager von Elektromotoren oder anderer rotierender Maschinen nützen den Einfluß des sich mit zunehmendem Verschleiß der Wälzlager ändernden Schwingungsverhaltens auf die Schwingungsanregung des Maschinengehäuses aus, um über die Erfassung der Gehäuseschwingungen Rückschlüsse auf den Wälzlagerverschleiß und damit auf die verbleibende Standzeit der Wälzlager ziehen zu können. Zu diesem Zweck werden den einzelnen Maschinen Überwachungseinrichtungen mit einem Schwingungsaufnehmer zugeordnet, der an eine Auswerteschaltung angeschlossen wird, um anhand des jeweils erfaßten Schwingungsverhaltens einen allfälligen Lagerwechsel zeitgerecht vornehmen zu können. Zur Auswertung der von den Schwingungsaufnehmern der einzelnen Maschinen erfaßten Schwingungen ist es bekannt (JP 2005 164315 A), eine allen Überwachungseinrichtungen gemeinsame Auswerteschaltung mit drahtlosen Übertragungsstrecken von den einzelnen Überwachungseinrichtungen zur zentralen Auswerteschaltung vorzusehen, so daß die von den Schwingungsaufnehmern der Überwachungseinrichtungen erfaßten Meßdaten mit Hilfe von Sendestufen zyklisch an die mit einer entsprechenden Empfangsstufe ausgerüsteten Auswerteschaltung übertragen werden können. Die durch geeignete Programme ausgewerteten Meßdaten der Überwachungseinrichtungen erlauben eine laufende Überwachung der Wälzlager der einzelnen Maschinen, allerdings nur mit einem erheblichen Steuerungsaufwand, weil eine Vielzahl von Daten fortwährend verarbeitet und verwaltet werden muß, was diese bekannte Vorrichtung für Produktionsanlagen mit einer Vielzahl von zu überwachenden Maschinen ungeeignet macht.

Werden bei einer anderen bekannten Vorrichtung zum Überwachen der Wälzlager von Radachsen (US 2003/0030565 A1) die Meßdaten der den Radlagern zugehörigen Schwingungs- und Temperaturaufnehmer zyklisch von einer übergeordneten, allen Überwachungseinrichtungen gemeinsamen Auswerteschaltung abgefragt, so ergibt sich ein kaum geringerer Steuerungsaufwand, weil sich mit dem Vorsehen von entsprechenden Empfangsstufen in den einzelnen Überwachungseinrichtungen für Steuersignale der Auswerteschaltung zum Senden der jeweils letzten Meßdaten die Datenverarbeitung in der gemeinsamen Auswerteschaltung nicht berührt wird.

Zum Auslesen der Meßdaten von Schwingungs- und Temperaturaufnehmern, die zur Überwachung der in einem gemeinsamen Gehäuse angeordneten Wälzlager einer Maschine eingesetzt werden, ist es darüber hinaus bekannt (EP 1 293 766 A1), der Überwachungseinrichtung einen Speicher entweder für die mit Hilfe einer Auswerteschaltung bewerteten Meßdaten oder für die unbewerteten Meßdaten vorzusehen, um die gespeicherten Daten über eine drahtlose Übertragungsstrecke auszulesen, so daß entweder die bewerteten Meßdaten angezeigt oder die unbewerteten Meßdaten mit Hilfe einer Auswerteschaltung bewertet werden können. Da lediglich ein Satz von Wälzlagern über einen gemeinsamen Schwingungs- bzw. Temperaturaufnehmer überwacht wird, stellen sich bei einer solchen Überwachungseinrichtung die mit der Zunahme der zu überwachenden Lagersätze auftretenden Schwierigkeiten hinsichtlich der Datenverarbeitung nicht.

Der Erfindung liegt somit die Aufgabe zugrunde, eine Vorrichtung zum Überwachen der Wälzlager von rotierenden Maschinen einer Produktionsanlage der eingangs geschilderten Art so zu verbessern, daß eine Beurteilung der Wälzlager der einzelnen Maschinen hinsichtlich ihrer verbleibenden Standzeit mit der notwendigen Sicherheit ermöglicht wird, und zwar mit einem vergleichsweise geringen Steuerungsaufwand.

Die Erfindung löst die gestellte Aufgabe dadurch, daß die Überwachungseinrichtungen je mit einem Meßdatenspeicher für die über einen Beobachtungszeitraum zeitbezogen erfaßten Meßdaten des Schwingungsaufnehmers sowie mit einer über eine Empfangsstufe ansteuerbaren Steuerschaltung zum Auslesen des Meßdatenspeichers an die Sendestufe versehen sind und daß die als tragbares Auswertegerät ausgebildete Auswerteschaltung eine über eine Eingabeeinheit beaufschlagbare Sendestufe zur drahtlosen Übertragung von Steuersignalen an die angewählte Überwachungseinrichtung zum Auslesen des Meßdatenspeichers an die Sendestufe umfaßt.

Da zufolge dieser Maßnahmen jede den einzelnen Maschinen zugeordnete Überwachungseinrichtung einen Meßdatenspeicher aufweist, in dem zumindest die über einen unmittelbar vorangegangenen Beobachtungszeitraum erfaßten Meßdaten des Schwingungsaufnehmers abgespeichert werden, können anhand der aus dem Meßdatenspeicher ausgelesenen, zeitbezogenen Meßdaten die für die Beurteilung der restlichen Standzeit der Wälzlager entscheidenden Veränderungen im Schwingungsverhalten des Maschinengehäuses herangezogen werden, was gegenüber einer bloßen Auswertung der jeweils letzten Meßdaten die Sicherheit der Vorhersage der restlichen Standzeiten erheblich steigert. Trotzdem bleibt der Steuerungsaufwand gering, weil die Meßdaten nicht zentral erfaßt und ausgewertet werden müssen, sondern in ihrem zeitlichen Verlauf jeweils mit Hilfe eines tragbaren Auswertegerätes aus dem Meßdatenspeicher der einzelnen Überwachungseinrichtungen ausgelesen werden, indem über die hiefür vorgesehene Eingabeeinheit der Auswerteschaltung ein Auslesebefehl an die jeweilige Übertragungseinrichtung gesendet wird, die aufgrund dieses Auslesebefehls die Meßdaten aus dem Meßdatenspeicher an die Auswerteschaltung übermittelt, so daß die programmbedingte Auswertung der übermittelten Meßdaten hinsichtlich der zu erwartenden restlichen Standzeit der Wälzlager der zugehörigen Maschine in einer Ausgabe- und Anzeigestufe zur Verfügung gestellt werden können. Die den Steuerungsaufwand entscheidend herabsetzende Einzelabfrage der den zeitlichen Verlauf des Schwingungsverhaltens speichernden Überwachungseinrichtungen mit Hilfe eines tragbaren, die Auswerteschaltung enthaltenden Auswertegerätes ist aufgrund des Auslesens des abgespeicherten zeitlichen Verlaufs der Meßdaten ohne Einbußen bezüglich der Sicherheit der Vorhersage der restlichen Laufzeit der Wälzlager möglich, wenn die Überwachungseinrichtungen regelmäßig in vorgegebenen Zeitspannen abgefragt werden.

Die drahtlosen, bidirektionalen Übertragungsstrecken zwischen den einzelnen Überwachungseinrichtungen und der tragbaren Auswerteschaltung zur Übertragung einerseits der Steuersignale von der Auswerteschaltung an die Überwachungseinrichtungen und anderseits der an die Auswerteschaltung zu übertragenden Meßdaten ergeben vorteilhafte Abfragebedingungen, weil die Überwachungseinrichtungen hiefür nicht zugänglich sein müssen. Dies gilt insbesondere für Funkverbindungen, für die nicht einmal ein Sichtkontakt erforderlich ist. Mit einer Beschränkung der Übertragungsleistung bzw. der Empfangsempfindlichkeit insbesondere für die Steuersignale zum Auslesen der Meßdatenspeicher können unter Umständen sonst erforderliche Maßnahmen zur Adressierung der Überwachungseinrichtungen entfallen. Um eine eindeutige Zuordnung der Meßdaten zu den Maschinen sicherzustellen, können die Überwachungseinrichtungen einen an die Sendestufe auslesbaren Speicher für Kenndaten der zu überwachenden Maschine aufweisen.

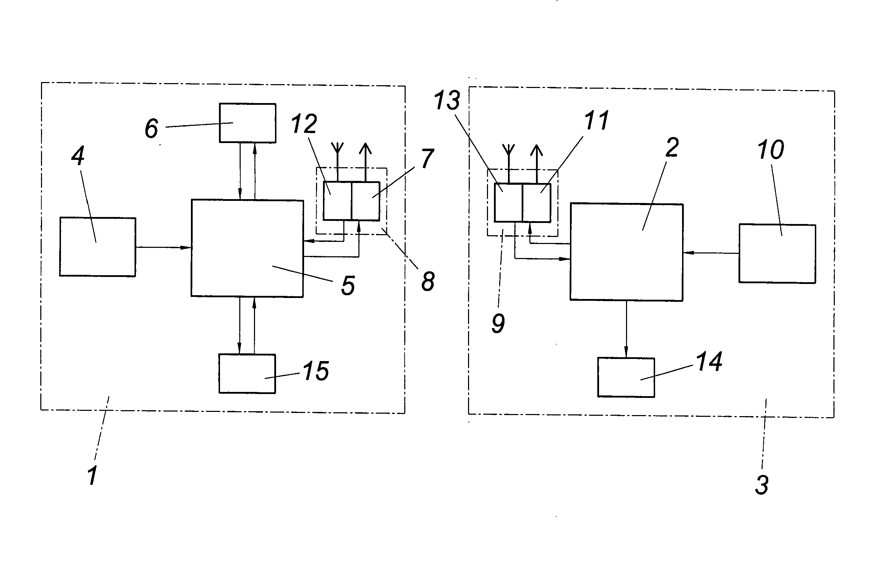

In der Zeichnung ist der Erfindungsgegenstand beispielsweise dargestellt, und zwar wird eine erfindungsgemäße Vorrichtung zum Überwachen der Wälzlager von Elektromotoren einer Produktionsanlage in einem schematischen Blockschaltbild gezeigt.

Eine Vorrichtung zum Überwachen der Wälzlager von Elektromotoren einer Produktionsanlage umfaßt den einzelnen Elektromotoren zugeordnete Überwachungseinrichtungen 1 sowie eine wahlweise mit einer dieser Überwachungseinrichtungen 1 verbindbare Auswerteschaltung 2, die Teil eines tragbaren Auswertegerätes 3 ist. Von den Überwachungseinrichtungen 1, die übereinstimmend aufgebaut sind, ist allerdings nur eine dargestellt. Diese am Stator eines Elektromotors befestigte, in einem Gehäuse angeordnete Überwachungseinrichtung 1 weist einen Schwingungsaufnehmer 4 auf, mit dessen Hilfe die Statorschwingungen erfaßt werden. Die sich auf die Kenngrößen der erfaßten Schwingungen beziehenden Meßdaten des Schwingungsaufnehmers werden über eine Steuerschaltung 5 in einen Meßdatenspeicher 6 eingelesen, und zwar mit einem Zeitbezug, so daß der zeitliche Verlauf der erfaßten Kenngrößen aus den abgespeicherten Meßdaten ersichtlich wird. Zur drahtlosen Übermittlung der abgespeicherten Meßdaten kann der Meßdatenspeicher 6 mittels der Steuerschaltung 5 an eine Sendestufe 7 einer Sende- und Empfangseinheit 8 einer Funkverbindung ausgelesen werden, die mit Hilfe einer entsprechenden Sende- und Empfangseinheit 9 des Auswertegerätes 3 zwischen diesem und der jeweiligen Überwachungseinrichtung 1 aufgebaut wird. Der Auslesebefehl wird durch das Betätigen einer Eingabeeinheit 10 des Auswertegerätes 3 ausgelöst. Mit einer Beaufschlagung der Eingabeeinheit 10 wird die Sendestufe 11 der Sende- und Empfangseinheit 9 über die Auswerteschaltung 2 im Sinne einer Steuersignalübertragung an die Überwachungseinrichtung 1 angesteuert, so daß die durch die Empfangsstufe 12 der Überwachungseinrichtung 1 empfangenen Steuersignale die Steuerschaltung 5 beaufschlagen und der Meßdatenspeicher 6 an die Sendestufe 7 ausgelesen wird, um die ausgelesenen Meßdaten durch die Empfangsstufe 13 des Auswertegerätes 3 empfangen zu können. Die übertragenen Meßdaten werden auf der Grundlage vorgegebener Auswerteprogramme unter Berücksichtigung ihrer zeitlichen Änderungen in der Auswerteschaltung 2 hinsichtlich des Einflusses einer verschleißbedingten Vergrößerung der wälzlagertypischen Frequenzkomponenten auf die verbleibende Standzeit der Wälzlager des mit der Überwachungseinrichtung 1 verbundenen Elektromotors beurteilt, wobei das Ergebnis dieser programmbedingten Beurteilung an eine Ausgabe- und Anzeigeeinheit 14 weitergeleitet wird.

Die Anwahl einer bestimmten von mehreren Überwachungseinrichtungen 1 kann bei einem entsprechenden gegenseitigen Abstand der Überwachungseinrichtungen 1 über eine Beschränkung der Sendeleistung bzw. der Empfangsempfindlichkeit der Sende- und Empfangseinheiten 8, 9 sichergestellt werden. In diesem Fall ist es zur Identifizierung der jeweiligen Überwachungseinrichtungen 1 vorteilhaft, Kenndaten des zugehörigen Elektromotors an das Auswertegerät 3 zu übertragen. Zu diesem Zweck können die Überwachungseinrichtungen 1 mit einem zusätzlichen Speicher 15 für solche Kenndaten versehen werden, die beispielsweise über die Eingabeeinheit 10 des Auswertegerätes 3 eingegeben werden können. Das Auslesen der Kenndaten aus dem Speicher 15 kann bei einer Beaufschlagung der Steuerschaltung 5 mit den Steuersignalen zum Auslesen des Meßdatenspeichers 6 automatisch erfolgen. Es ist aber selbstverständlich auch eine gesonderte Ansteuerung möglich.

Ist keine ausreichende gegenseitige Abschirmung der Überwachungseinrichtungen 1 beim Anwählen durch das Auswertegerät 3 möglich, so sind die Überwachungseinrichtungen 1 in bekannter Weise mit entsprechenden Adressen zu versehen, so daß die einzelnen Überwachungseinrichtungen 1 durch die mit einem entsprechenden Adressenanteil versehenen Steuersignale des Auswertegerätes 3 gezielt angesteuert werden können.

Obwohl das dargestellte Ausführungsbeispiel die Überwachung der Wälzlager von Elektromotoren betrifft, können in gleicher Weise selbstverständlich auch die Wälzlager anderer rotierender Maschinen überwacht werden. Voraussetzung ist lediglich, daß die Gehäuseschwingungen eine wälzlagertypische Frequenzkomponente aufweisen.

## Patentansprüche

1. Vorrichtung zum Überwachen der Wälzlager von rotierenden Maschinen einer Produktionsanlage mit den einzelnen Maschinen zugehörigen Überwachungseinrichtungen (1), die jeweils einen Schwingungsaufnehmer (4), eine Sendestufe (7) für die durch den Schwingungsaufnehmer (4) erfassten Messdaten sowie eine über eine Empfangsstufe (12) ansteuerbare Steuerschaltung (5) zur Beaufschlagung der Sendestufe (7) mit den Messdaten aufweisen, und mit einer Auswerteschaltung (2), die mit einer Sendestufe (11) zur drahtlosen Übertragung von Steuersignalen an die ausgewählte Überwachungseinrichtung (1) zum Senden der Messdaten versehen und an eine Empfangsstufe (13) für die über eine drahtlose Übertragungsstrecke von den Überwachungseinrichtungen (1) gesendeten Messdaten angeschlossen ist, **dadurch gekennzeichnet, dass** die Überwachungseinrichtungen (1) je einen Messdatenspeicher (6) für die über einen Beobachtungszeitraum zeitbezogen erfassten Messdaten des Schwingungsaufnehmers (4) umfassen und dass die Auswerteschaltung (2) als tragbares Auswertegerät (3) mit einer Eingabeeinheit (10) zur Beaufschlagung ihrer Sendestufe (11) ausgebildet ist.

2. Vorrichtung nach Anspruch 1, **dadurch gekennzeichnet, dass** die Überwachungseinrichtungen (1) einen an die Sendestufe (7) auslesbaren Speicher (14) für Kenndaten der zu überwachenden Maschinen aufweisen.
